# EUROPÄISCHE PATENTANMELDUNG

(11) **EP 2 320 393 A1**
(43) Veröffentlichungstag der Anmeldung: **11.05.2011**
(21) Anmeldenummer: 09012705.1
(22) Anmeldetag: 07.10.2009
(51) Int. Cl.: G07F 7/00, G07F 17/00, G06Q 20/00

(54) **Verfahren zur bargeldlosen Abwicklung von automatenbezogenen Nutzungsvorgängen**

(71) Anmelder: Scheidt & Bachmann GmbH, D-41238 Mönchengladbach (DE)
(72) Erfinder: Dr. Miller Norbert, 41063 Mönchengladbach (DE); Flügge Wolfgang, 41352 Korschenbroich (DE)
(74) Vertreter: Stenger, Watzke & Ring

(57) **Zusammenfassung**

Die vorliegende Erfindung betrifft ein Verfahren zur vorzugsweise bargeldlosen Abwicklung von insbesondere automatenbezogenen Nutzungsvorgängen unter Verwendung einer Speicherkarte (4), wobei eine Nutzung durch einen mit einer Datenbank (5) und/oder einer Verarbeitungseinheit (1) in Kommunikationsverbindung (2) stehenden Automaten (3) bei Erfassung einer Speicherkarte (4) bereitgestellt wird und nutzungsbezogene Transaktionsdaten vom Automaten (3) an die Datenbank (1) und/oder die Verarbeitungseinheit (1) übermittelt werden Die Erfindung hat es sich zur Aufgabe gemacht, ein gattungsgemäßes Verfahren dahingehend weiterzubilden, dass die bestimmungsgemäße Funktion des Automaten beziehungsweise des Smartcard-Schreib/Lesegeräts unabhängig vom Vorhandensein einer Kommunikationsverbindung zwischen dem Automaten beziehungsweise dem Smartcard-Schreib-/Lesegerät und der lokalen Datenbank erreicht werden kann. Als Lösung wird mit der Erfindung vorgeschlagen, dass die nutzungsbezogenen Transaktionsdaten zumindest zeitweise auf der Speicherkarte (4) gespeichert werden und die Speicherkarte (4) somit als Informationstransfermedium verwendet wird.

## Beschreibung

Die vorliegende Erfindung betrifft ein Verfahren zur vorzugsweise bargeldlosen Abwicklung von insbesondere automatenbezogenen Nutzungsvorgängen unter Verwendung einer Speicherkarte, wobei eine Nutzung durch einen mit einer Datenbank und/oder einer Verarbeitungseinheit in Kommunikationsverbindung stehenden Automaten bei Erfassung einer Speicherkarte bereitgestellt wird und nutzungsbezogene Transaktionsdaten vom Automaten an die Datenbank und/oder die Verarbeitungseinheit übermittelt werden.

Verfahren zur bargeldlosen Abwicklung von automatenbezogenen Nutzungsvorgängen sind in einer Vielzahl bekannt, beispielsweise im öffentlichen Personenverkehr, bei der Nutzung öffentlicher Einrichtungen wie Sportstätten, Veranstaltungen oder dergleichen. Eine Reihe gattungsgemäßer Verfahren wird unter Verwendung einer Smartcard durchgeführt, wobei der Automat durch ein Smartcard-Schreib-/Lesegerät gebildet ist, mittels dem der Automat mit der Smartcard in Kommunikationsverbindung gebracht werden kann. Der Automat steht mit einer lokalen Verarbeitungseinheit, die eine lokale Datenbank umfasst, in Kommunikationsverbindung. Mittels einer von der lokalen Verarbeitungseinheit räumlich getrennten zentralen Verarbeitungseinheit mit Datenbanken, die über Smartcard bezogene Daten verfügt, wird die Nutzung abgerechnet. Bei einem Nutzungsvorgang erfasst das Smartcard-Schreib-/Lesegerät des Automaten die Smartcard und übermittelt nutzungsbezogene Transaktionsdaten an die lokale Verarbeitungseinheit, welche die gewünschte Nutzung freigibt, beispielsweise indem eine Nutzungsberechtigung auf der Smartcard gespeichert wird.

Derartige Verfahren werden unter anderem im Bereich des öffentlichen Personenverkehrs eingesetzt, wobei die Smartcard als elektronischer Fahrausweis verwendet wird. Beim öffentlichen Personenverkehr dient die Smartcard somit als elektronischer Fahrausweis. Mit ihr kann ein Nutzer des öffentlichen Verkehrsmittels seine Berechtigung zur Nutzung nachweisen.

Die bekannten Verfahren erfordern es jedoch, dass der Automat beziehungsweise das Smartcard-Schreib-/Lesegerät mit der lokalen Verarbeitungseinheit und der darin enthaltenen lokalen Datenbank in Kommunikationsverbindung steht. Nur dann können ordnungsgemäß Tarifdaten erfasst, Transaktionsdaten erstellt, in der lokalen Datenbank zwischengespeichert und an die zentrale Datenbank zwecks Abrechnung beziehungsweise Verbuchung übermittelt werden. Ist eine Kommunikationsverbindung zwischen dem Automaten beziehungsweise dem Smartcard-Schreib-/Lesegerät und der lokalen Verarbeitungseinheit nicht vorhanden, ist die bestimmungsgemäße Funktion des Systems nicht mehr gewährleistet. Im Falle des öffentlichen Personenverkehrs ist es dann nicht möglich, einen gültigen elektronischen Fahrausweis zu erwerben.

Unter Berücksichtigung dieses Sachverhalts hat es sich die Erfindung zur **Aufgabe** gemacht, ein gattungsgemäßes Verfahren dahingehend weiterzubilden, dass die bestimmungsgemäße Funktion des Automaten beziehungsweise des Smartcard-Schreib-/Lesegeräts unabhängig vom Vorhandensein einer Kommunikationsverbindung zwischen dem Automaten beziehungsweise dem Smartcard-Schreib-/Lesegerät und der lokalen Datenbank erreicht werden kann.

Als **Lösung** wird mit der Erfindung vorgeschlagen, dass die nutzungsbezogenen Transaktionsdaten zumindest zeitweise auf der Speicherkarte gespeichert werden und die Speicherkarte somit als Informationstransfermedium verwendet wird.

Im Unterschied zum Stand der Technik wird über die Speicherkarte eine weitere, virtuelle Kommunikationsverbindung geschaffen, indem nämlich die Speicherkarte mit den nutzungsbezogenen Transaktionsdaten versehen wird und wie ein Teil einer Kommunikationsverbindung als Informationstransfermedium verwendet wird, um bei der späteren Nutzung eines Automaten beziehungsweise Smartcard-Schreib-/Lesegeräts, welches über eine Verbindung zu einer beispielsweise lokalen Verarbeitungseinheit mit Datenbank verfügt, die Transaktionsdaten nachträglich zu erzeugen. Ein Automat beziehungsweise ein Smartcard-Schreib-/Lesegerät benötigt deshalb nicht notwendig eine Kommunikationsverbindung zu der Verarbeitungseinheit nebst gegebenenfalls einer Datenbank, um eine nutzungsbezogene Transaktion durchzuführen. Bei einer folgenden Verwendung der Speicherkarte, beispielsweise an einem weiteren Automaten beziehungsweise Smartcard-Schreib-/Lesegerät oder dergleichen, bei dem eine Kommunikationsverbindung zur einer insbesondere lokalen Datenbank besteht, können die in der Speicherkarte gespeicherten nutzungsbezogenen Transaktionsdaten an die Verarbeitungseinheit gegeben und dort unter Einbeziehung von Tarifdaten ermittelt, gespeichert und nachfolgend an eine vorzugsweise zentrale Datenbank übermittelt werden, um auf diese Weise die bargeldlose Abwicklung zu ermöglichen beziehungsweise eine Verbuchung des Vorgangs zu erlauben. Die Speicherkarte ist in diesem Fall Bestandteil der Kommunikationsverbindung, da sie der Übermittlung der nutzungsbezogenen Transaktionsdaten an eine Datenbank dient.

Der Automat im Sinne der Erfindung ist eine Einrichtung mit einem Smartcard-Schreib-/Lesegerät, die dazu dient, mit der Speicherkarte in Kommunikationsverbindung zu treten, um einen Nutzungsvorgang informationstechnisch, insbesondere abrechnungstechnisch zu bearbeiten. Zusätzlich kann der Automat weitere Einrichtungen umfassen, beispielsweise Kommunikationseinrichtungen zur Kommunikation mit der Datenbank und/oder der Verarbeitungseinheit, oder er kann auch Einrichtungen aufweisen, mittels denen aus gelesenen Daten der Speicherkarte Transaktionsdaten erzeugt werden können, beispielsweise eine Rechnereinrichtung, eine Hardwareschaltung oder dergleichen. Mittels dem Smartcard-Schreib-/Lesegerät können die Transaktionsdaten auf die Speicherkarte geschrieben werden. Unter Automat soll insbesondere nicht ein handelsüblicher Fahrkartenautomat verstanden werden. Gleichwohl kann der Automat der Erfindung mit einem Fahrkartenautomat kombiniert sein.

Die Datenbank kann eine zentrale Datenbank sein, die von der Datenbank der Verarbeitungseinheit, die eine lokale Datenbank sein kann, getrennt ist. In dieser zentralen Datenbank können sämtliche Funktionen und Aufgaben zentral zusammengefasst sein. Vorzugsweise ist die zentrale Datenbank in einem räumlich vorgegebenen Bereich angeordnet. Darüber hinaus kann die Datenbank auch lediglich eine lokale Datenbank sein. Mehrere lokale Datenbanken können miteinander und mit einer zentralen Datenbank in Kommunikationsverbindung stehen. Natürlich ist das Verfahren der Erfindung nicht auf automatenbezogene Nutzungsvorgänge beschränkt. Es kann auch bei nicht automatenbezogenen Nutzungsvorgängen zum Einsatz kommen, zum Beispiel an einem Kiosk oder einer Tankstelle. Das Verfahren der Erfindung eignet sich natürlich besonders für die Abwicklung von bargeldlosen Nutzungsvorgängen. Es kann aber auch bei bargeldbasierten Nutzungsvorgängen zum Einsatz kommen, etwa um später ausdruckbare Belege, insbesondere Quittungen, Rechnungen oder dergleichen zu ermöglichen.

Ein System, welches die Erfindung realisiert, umfasst eine vorzugsweise zentrale Datenbank, in der nutzer- und nutzungsrelevante Daten gespeichert sind, eine insbesondere lokale Datenbank, die vorzugsweise Tarifdaten sowie standort- und systemrelevante Daten vorhält sowie eine Speicherkarte, die als Informationstransfermedium dient. Anstelle der zentralen und der lokalen Datenbank kann aber auch lediglich eine einzige Datenbank vorgesehen sein, die sowohl lokal als auch zentral angeordnet sein kann. Die vorzugsweise lokale Verarbeitungseinheit mit der lokalen Datenbank kann zumindest zeitweise in Kommunikationsverbindung mit der zentralen Datenbank einer zentralen Verarbeitungseinheit stehen. Es können unterschiedliche Arten von Automaten beziehungsweise Smartcard-Schreib-/Lesegeräten vorgesehen sein, wobei wenigstens ein Teil der Automaten beziehungsweise Smartcard-Schreib-/Lesegeräte zumindest zeitweise in Kommunikationsverbindung mit der Verarbeitungseinheit und/oder ihrer Datenbank steht. Einzelne Automaten beziehungsweise Smartcard-Schreib-/Lesegeräte können ausschließlich für einen autonomen Betrieb vorgesehen sein, das heißt, dass sie zu keinem Zeitpunkt eine Kommunikationsverbindung zu der Datenbank beziehungsweise der Verarbeitungseinheit unterhalten können.

Die Speicherkarte dient dazu, zumindest wenn eine Kommunikationsverbindung zwischen dem Automaten beziehungsweise Smartcard-Schreib-/Lesegerät und einer lokalen Verarbeitungseinheit mit Datenbank nicht besteht oder nicht möglich ist, für die nutzungsbezogenen Transaktionsdaten, die einer jeweiligen Nutzung zugeordnet sind, einen Speicher bereitzustellen. Die Speicherkarte umfasst somit einen Speicher, in dem die nutzungsbezogenen Transaktionsdaten gespeichert werden können.

So können die nutzungsbezogenen Transaktionsdaten zu einem späteren Zeitpunkt aus dem Speicher der Speicherkarte ausgelesen werden und durch Verarbeitung in einer Verarbeitungseinheit und Nutzung von Tarifdaten aus der lokalen Datenbank die vollständigen Transaktionsdaten ermittelt werden. Dies kann beispielsweise dann erfolgen, wenn die Speicherkarte bei einem Automaten beziehungsweise Smartcard-Schreib-/Lesegerät zum Einsatz kommt, welcher beziehungsweise welches zumindest während der Nutzung in Kommunikationsverbindung mit der Datenbank beziehungsweise Verarbeitungseinheit steht. Die auf der Speicherkarte gespeicherten nutzungsbezogenen Transaktionsdaten werden dann ausgelesen, in der lokalen Verarbeitungseinheit verarbeitet, die neue Transaktionsdaten erzeugt und an die lokale Datenbank und im Nachgang an die zentrale Datenbank übermittelt. Die diesbezüglichen Nutzungen können dann bargeldlos abgewickelt werden. So kann die Verarbeitung der nutzungsbezogenen Daten aus der Speicherkarte auch zur Reduzierung gegebenenfalls auf der Speicherkarte ebenfalls gespeicherter Geldguthaben genutzt werden.

Es kann insbesondere bei Vorhandensein einer Verbindung zwischen dem Automaten beziehungsweise dem Smartcard-Schreib-/Lesegerät und der Verarbeitungseinheit beziehungsweise Datenbank natürlich vorgesehen sein, dass bei einem automatenbezogenen Nutzungsvorgang an diesem Automaten beziehungsweise Smartcard-Schreib-/Lesegerät, der beziehungsweise das in Kommunikationsverbindung mit der lokalen Verarbeitungseinheit und Datenbank steht, die nutzungsbezogenen Transaktionsdaten nicht auf der Speicherkarte gespeichert sondern stattdessen direkt an die lokale Datenbank übermittelt werden.

Darüber hinaus kann vorgesehen sein, dass die nutzungsbezogenen Transaktionsdaten in jedem Fall auf der Speicherkarte gespeichert werden, und zwar unabhängig davon, ob eine Kommunikationsverbindung zwischen dem Automaten beziehungsweise dem Smartcard-Schreib-/Lesegerät und der lokalen Datenbank beziehungsweise der Verarbeitungseinheit besteht. Sinnvoll ist dies beispielsweise, wenn die auf der Speicherkarte gespeicherten nutzungsbezogenen Transaktionsdaten regelmäßig nicht vom Automaten beziehungsweise Smartcard-Schreib-/Lesegerät sondern von einem zusätzlichen Kommunikationsterminal ausgelesen werden, welches das System ebenfalls umfassen kann. Das Kommunikationsterminal kann auch ein Nutzer-PC sein. Darüber hinaus kann eine Redundanz erreicht werden, indem die nutzungsbezogenen Transaktionsdaten sowohl in der zentralen Datenbank als auch auf der Speicherkarte vorhanden sind.

Weiterhin können nutzungsbezogene Transaktionsdaten auch lediglich teilweise auf der

Speicherkarte gespeichert werden, beispielsweise indem eine die jeweilige Transaktion identifizierende Daten wie Transaktionsnummer, Transaktionszeit, Art der Nutzung oder dergleichen auf der Speicherkarte gespeichert werden, wobei wertbezogene Daten wie Kaufpreis, Kontonummer oder dergleichen lediglich an die Datenbank übermittelt werden. Dies kann nach Bedarf beliebig gestaltet werden.

Insbesondere im Falle der Störung der direkten Übermittlung der nutzungsbezogenen Transaktionsdaten von einem Automaten beziehungsweise Smartcard-Schreib-/Lesegerät an die Verarbeitungseinheit und/oder Datenbank ist somit die Speicherkarte als Informationstransfermedium Teil der Kommunikationsverbindung, wobei die Kommunikationsverbindung sowohl eine räumliche als auch zeitliche Kommunikation ermöglichen kann.

Die nicht bestehende Kommunikationsverbindung kann beispielsweise aufgrund einer Störung oder dergleichen hervorgerufen sein. Darüber hinaus kann die nicht bestehende Kommunikationsverbindung auch durch einen autonomen Betrieb des Automaten beziehungsweise Smartcard-Schreib-/Lesegeräts vorgesehen sein, beispielsweise wenn der Automat beziehungsweise das Smartcard-Schreib-/Lesegerät an einer abgelegenen Stelle aufgestellt ist, an der eine Kommunikationsverbindung mit einer Verarbeitungseinheit und/oder Datenbank nur mit einem hohen Kostenaufwand herstellbar beziehungsweise zu unterhalten ist. Die Kommunikationsverbindung kann unidirektional oder auch bidirektional sein. Bei einer unidirektionalen Kommunikationsverbindung erfolgt eine Übermittlung der Transaktionsdaten vorzugsweise ausschließlich in Richtung vom Automaten beziehungsweise Smartcard-Schreib-/Lesegerät zur Verarbeitungseinheit und/oder der Datenbank.

Die Speicherkarte kann durch eine Smartcard gebildet sein. Sie kann darüber hinaus aber auch durch eine Magnetstreifenkarte, einen Transponderchip oder dergleichen gebildet sein, wobei sich die Speicherkarte im Wesentlichen dadurch auszeichnet, dass sie als mobile, insbesondere tragbare Einheit von vorzugsweise geringer Baugröße wie bei einer Scheckkarte, einer Kreditkarte, einer Münze, einem Stäbchen, einem Schlüsselanhänger oder dergleichen über eine Speichermöglichkeit sowie eine Schnittstelle verfügt, über die die Speichermöglichkeit kommunikationstechnisch gekoppelt werden kann. Somit verfügt die Speicherkarte über einen Speicher, der insbesondere als elektronischer Datenspeicher, als Magnetspeicher oder dergleichen ausgebildet sein kann. Der Speicher ist über die Schnittstelle zugänglich. Entsprechend der physikalischen Ausgestaltung der Speicherkarte verfügt der Automat beziehungsweise das Smartcard-Schreib-/Lesegerät ebenfalls über eine angepasste Schnittstelle, die bei einer Smartcard beispielsweise ausschließlich durch ein Smartcard-Schreib-/Lesegerät gebildet sein kann. Bei einer Speicherkarte mit einem Magnetstreifen kann stattdessen ein Magnetkopf zur Herstellung der Kommunikationsverbindung vorgesehen sein.

Nutzungsvorgänge, insbesondere automatenbezogene Nutzungsvorgänge können beispielsweise die Bereitstellung von Dienstleistungen, aber auch von Waren oder dergleichen sein. Darüber hinaus kann ein automatenbezogener Nutzungsvorgang auch die Bereitstellung einer Nutzungsberechtigung sein, die beispielsweise auf der Speicherkarte gespeichert werden kann. Die Nutzungsberechtigung kann zur Nutzung von Einrichtungen, beispielsweise öffentlichen Verkehrsmitteln, Sportstätten, Veranstaltungen oder dergleichen dienen. Die Schnittstellen der Speicherkarte und des Automaten beziehungsweise Smartcard-Schreib-/Lesegeräts können für eine leitungsgebundene Kommunikation aber auch für eine drahtlose Kommunikation ausgebildet sein. So kann beispielsweise vorgesehen sein, dass eine Kommunikationsverbindung zwischen dem Automaten beziehungsweise Smartcard-Schreib-/Lesegerät und der Speicherkarte hergestellt wird, sobald die Speicherkarte in Kommunikationsreichweite zum Automaten beziehungsweise Smartcard-Schreib-/Lesegerät gelangt. Die Kommunikation zwischen Automaten beziehungsweise Smartcard-Schreib-/Lesegerät und Speicherkarte kann vorteilhaft automatisch hergestellt werden.

In der vorzugsweise zentralen Datenbank sind unter anderem Smartcard-bezogene Daten abgelegt, die es erlauben, die Smartcard den nutzungsbezogenen Transaktionsdaten zuzuordnen. Hierfür weist die Speicherkarte vorzugsweise eine Identifikation auf, die in der zentralen Datenbank hinterlegt ist. Dies ermöglicht es, die nutzungsbezogenen Transaktionsdaten individuell der jeweiligen Speicherkarte zuzuordnen. Dadurch ist es möglich, eine nutzungsbezogene Transaktion einer Speicherkarte und schlussendlich einem der Speicherkarte zugeordneten Nutzer zuzuordnen, beispielsweise um die Transaktion gegenüber dem Nutzer abrechnen zu können. Die bargeldlose Abwicklung eines Nutzungsvorgangs kann somit eine Inrechnungstellung oder eine Abbuchung von einem Nutzerkonto des Nutzers der Smartcard umfassen. Nutzungsvorgänge umfassen nicht nur eine Nutzung in Form einer Bereitstellung einer Dienstleistung und/oder einer Ausgabe einer Ware, sondern sie umfassen auch die Verfügbarmachung beziehungsweise Bereitstellung einer Nutzungsberechtigung, die einem Nutzer, der vorzugsweise Besitzer der Speicherkarte ist, berechtigt, eine bestimmte Nutzung in Anspruch zu nehmen. Die Nutzungsberechtigung kann somit beispielsweise in Form eines Codes auf der Speicherkarte gespeichert sein, so dass sie während einer Nutzung jederzeit, beispielsweise für Prüfungszwecke aus der Speicherkarte ausgelesen werden kann.

Es wird ferner vorgeschlagen, dass die auf der Speicherkarte gespeicherten Transaktionsdaten mit einer Kennzeichnung gespeichert werden. Dies erlaubt es, die Transaktionsdaten von weiteren auf der Speicherkarte gespeicherten Daten einfach zu unterscheiden. Darüber hinaus kann durch die Kennzeichnung vorgesehen sein, dass die Transaktionsdaten in einem für Transaktionsdaten vorgegebenen Bereich der Speicherkarte gespeichert werden. Der Bereich kann durch einen fest vorgegebenen Teil des Speichers, aber auch durch einen separaten Speicher gebildet sein. Der Bereich kann beispielsweise besonders geschützt sein, so dass er Manipulationen unberechtigter Dritter deutlich erschwert. Die Kennzeichnung kann beispielsweise durch eine spezielle Kodierung, zusätzliche Daten, beispielsweise Kennzeichnungsbits oder dergleichen gebildet sein.

Eine Weiterbildung sieht vor, dass auf der Speicherkarte gespeicherte Transaktionsdaten vorzugsweise zeitversetzt ausgelesen werden, wenn die Speicherkarte von einem mit der Verarbeitungseinheit und/oder Datenbank in Kommunikationsverbindung stehenden Automaten beziehungsweise Smartcard-Schreib-/Lesegerät erfasst wird. Auf diese Weise wirkt die Speicherkarte als Teil der Kommunikationsverbindung, indem sie nämlich die zuvor auf ihren gespeicherten Transaktionsdaten an einem weiteren Automaten beziehungsweise Smartcard-Schreib-/Lesegerät bereitstellen kann, der beziehungsweise das diese Daten aus der Speicherkarte ausliest und an die lokale Verarbeitungseinheit und/oder Datenbank übermittelt. Dadurch wird die Speicherkarte Bestandteil der Kommunikationsverbindung zwischen dem Automaten beziehungsweise Smartcard-Schreib-/Lesegerät und der Datenbank. Natürlich kann das Auslesen auch an dem Automaten beziehungsweise Smartcard-Schreib-/Lesegerät erfolgen, der beziehungsweise das seine nutzungsbezogenen Transaktionsdaten auf der Speicherkarte gespeichert hat, sofern bei einer weiteren, späteren Kommunikation zwischen der Speicherkarte und dem Automaten beziehungsweise Smartcard-Schreib-/Lesegerät eine Kommunikationsverbindung zwischen dem Automaten beziehungsweise Smartcard-Schreib-/Lesegerät und der Datenbank besteht. Dies kann beispielsweise der Fall sein, wenn eine Störung der Kommunikationsverbindung zwischen dem Automaten beziehungsweise Smartcard-Schreib-/Lesegerät und der Datenbank aufgehoben ist.

Es kann vorgesehen sein, dass der Nutzer seine Speicherkarte zum Auslesen der Transaktionsdaten in den Erfassungsbereich eines Smartcard-Schreib-/Lesegerätes bringt, woraufhin der Automat beziehungsweise das Smartcard-Schreib-/Lesegerät eine Kommunikationsverbindung zur Speicherkarte herstellt. Natürlich kann auch vorgesehen sein, dass der Nutzer das Herstellen der Kommunikationsverbindung zwischen dem Automaten beziehungsweise Smartcard-Schreib-/Lesegerät und der Speicherkarte steuern kann, beispielsweise indem eine Betätigungstaste zur Herstellung der Kommunikationsverbindung vom Nutzer betätigt wird. Dies kann dazu dienen, den Energieverbrauch des Automaten beziehungsweise Smartcard-Schreib-/Lesegeräts zu reduzieren, indem in Bereitschaftsphasen die Sende/Empfangseinheit abgeschaltet werden kann. Darüber hinaus kann vorgesehen sein, dass die Smartcard-Schreib-/Lesegeräte automatisch oder durch ein Signal von der lokalen Verarbeitungseinheit aktiviert und deaktiviert beziehungsweise in einen Sleep-Mode versetzt werden können. Dies kann den Energieverbrauch zusätzlich reduzieren. Dies erweist sich besonders im Falle von batteriegetriebenen Automaten beziehungsweise Smartcard-Schreib-/Lesegeräten als sehr sinnvoll.

Die auf der Speicherkarte gespeicherten Transaktionsdaten können beim Auslesen gelöscht werden. Hierdurch kann erreicht werden, dass ein auf der Speicherkarte für die Transaktionsdaten erforderlicher Speicher hinsichtlich seiner Speicherkapazität kleingehalten werden kann.

Das Auslesen der Transaktionsdaten aus der Speicherkarte kann darüber hinaus durch bestimmte kryptische Verfahren sowie auch Berechtigungen geschützt sein, so dass ein Zugriff auf die Transaktionsdaten durch unberechtigte Dritte erschwert ist.

Die auf der Speicherkarte gespeicherten und ausgelesenen Transaktionsdaten können mit einer Kennzeichnung versehen werden. Diese Kennzeichnung unterscheidet sich von der zuvor genannten Kennzeichnung dadurch, dass hier die Transaktionsdaten von den anderen Transaktionsdaten unterscheidbar gekennzeichnet werden, die bereits ausgelesen wurden. Dadurch wird vermieden, dass Transaktionsdaten mehrfach ausgelesen werden und so einen unnötigen Kommunikationsaufwand verursachen. Es kann auch vorgesehen sein, dass die ausgelesenen Daten zunächst auf der Speicherkarte weiterhin gespeichert bleiben und zu einem späteren Zeitpunkt in einem separaten Schritt gelöscht werden. Hierfür eignet sich diese Kennzeichnung ebenfalls, da die ausgelesenen Transaktionsdaten, die gelöscht werden sollen, anhand der Kennzeichnung unverzüglich erkannt werden können. Dies erlaubt es, Auslesen und Löschen von Transaktionsdaten der Speicherkarte verfahrenstechnisch zu trennen, so dass sie zeitlich nacheinander ausgeführt werden können. So können ausgelesene Transaktionsdaten zunächst auf der Speicherkarte verbleiben und zu einem späteren Zeitpunkt, beispielsweise bei einer weiteren Kommunikation zu einem weiteren Automaten beziehungsweise Smartcard-Schreib-/Lesegerät gelöscht werden. Hierdurch kann die Datensicherheit weiter verbessert werden, weil das Löschen der Transaktionsdaten erst bei einer folgenden Kommunikation zu einem Automaten beziehungsweise Smartcard-Schreib-/Lesegerät erfolgt. Dies ermöglicht es, gegebenenfalls fehlerhaft ausgelesene beziehungsweise übermittelte Transaktionsdaten bei einer folgenden Kommunikation verifizieren zu können.

Die auf einer Speicherkarte gespeicherten Transaktionsdaten können auch mittels eines Kommunikationsterminals ausgelesen werden. Das Kommunikationsterminal verfügt ebenfalls über eine Schreib-/Leseeinrichtung, mit der eine Kommunikationsverbindung zur Speicherkarte hergestellt werden kann. Im Unterschied zum Automaten beziehungsweise Smartcard-Schreib-/Lesegerät verfügt das Kommunikationsterminal jedoch nicht über die Möglichkeit, Nutzungsvorgänge wie der Automat beziehungsweise das Smartcard-Schreib-/Lesegerät zu ermöglichen. Das Kommunikationsterminal dient somit lediglich dazu, die auf der Speicherkarte gespeicherten Transaktionsdaten auszulesen und beispielsweise an die Datenbank zu übermitteln. Darüber hinaus kann durch das Kommunikationsterminal natürlich auch vorgesehen sein, dass die gespeicherten Transaktionsdaten dem Nutzer zur Information bereitgestellt werden können. Dies kann beispielsweise dadurch erreicht werden, indem die entsprechenden Transaktionsdaten visuell auf einer optischen Ausgabeeinrichtung wie einem Monitor oder dergleichen angezeigt werden. Darüber hinaus kann vorgesehen sein, dass die gespeicherten Transaktionsdaten ausgedruckt werden oder Belege für die Transaktionsdaten für den Nutzer bereitgestellt werden.

Vorzugsweise erfolgt das Auslesen der auf der Speicherkarte gespeicherten Transaktionsdaten automatisch. Dies kann beispielsweise erreicht werden, sobald die Kommunikationsverbindung zwischen der Speicherkarte und dem Automaten beziehungsweise Smartcard-Schreib-/Lesegerät beziehungsweise dem Kommunikationsterminal hergestellt wird. Bei einer drahtlosen Kommunikationsverbindung zwischen Kommunikationsterminal beziehungsweise Automaten beziehungsweise Smartcard-Schreib-/Lesegerät und Speicherkarte kann vorgesehen sein, dass das Auslesen automatisch dann erfolgt, sobald die Speicherkarte in Kommunikationsreichweite zum Automaten beziehungsweise Smartcard-Schreib-/Lesegerät beziehungsweise zum Kommunikationsterminal gelangt. Sind mehrere Speicherkarten in Kommunikationsreichweite des Automaten beziehungsweise des Smartcard-Schreib-/Lesegeräts beziehungsweise des Kommunikationsterminals, kann ein Polling vorgesehen sein, um Kommunikationskonflikte zu vermeiden.

Auf Basis der Transaktionsdaten kann die Abwicklung der Nutzung erfolgen. Dies wird vorzugsweise anhand der Daten der Verarbeitungseinheit und/oder der Datenbank durchgeführt. Die Verarbeitungseinheit kann eine zentrale Verarbeitungseinheit sein , die mit der zentralen Datenbank in Kommunikationsverbindung steht oder insbesondere die zentrale Datenbank umfassen kann. Natürlich kann die Datenbank auch räumlich getrennt von der Zentrale, beispielsweise als separate Einrichtung in Form von lokalen Datenbanken oder auch in einem oder mehreren lokalen Verarbeitungseinheiten, angeordnet sein. Aufgrund der Transaktionsdaten können beispielsweise abrechnungsrelevante Daten generiert werden, die es erlauben, die Nutzung kostenmäßig einem Nutzer als Inhaber der Speicherkarte zu belasten. Die Belastung kann durch Abbuchung von einem Konto, Rechnungsstellung, Abbuchung von einem auf der Speicherkarte vorhandenen Guthaben oder dergleichen erfolgen.

Ferner wird vorgeschlagen, dass die aus der Speicherkarte von einem mit einer Verarbeitungseinheit und/oder Datenbank in Kommunikationsverbindung stehenden Smartcard-Schreib-/Lesegerät zeitversetzt ausgelesenen Daten durch eine Verarbeitungseinheit weiterverarbeitet werden.

Weiterhin können die weiterverarbeiteten Transaktionsdaten in einer lokalen Datenbank gespeichert werden.

Eine Ausgestaltung sieht vor, dass die weiterverarbeiteten Transaktionsdaten an eine zentrale Datenbank weitergeleitet werden.

Darüber hinaus können aufgrund der Weiterverarbeitung über das Smartcard-Schreib-/Lesegerät geänderte Berechtigungsdaten auf die Speicherkarte geschrieben werden.

Weitere Merkmale und Vorteile sind der folgenden Beschreibung eines Ausführungsbeispiels zu entnehmen. Im Wesentlichen gleiche Bauteile sowie gleiche Funktionen mit den gleichen Bezugszeichen bezeichnet. Die Zeichnungen dienen lediglich der Erläuterung des folgenden Ausführungsbeispiels.
- Fig. 1: ein System zur Abrechnung von Fahrpreisen eines öffentlichen Verkehrsmittels, welches zur Ausführung des erfindungsgemäßen Verfahrens dient und
- Fig. 2: das System gemäß Fig. 1 bei dem eine Kommunikationsverbindung zwischen einer lokalen Datenbank sowie dem Smartcard-Schreib- /Lesegerät gestört ist.

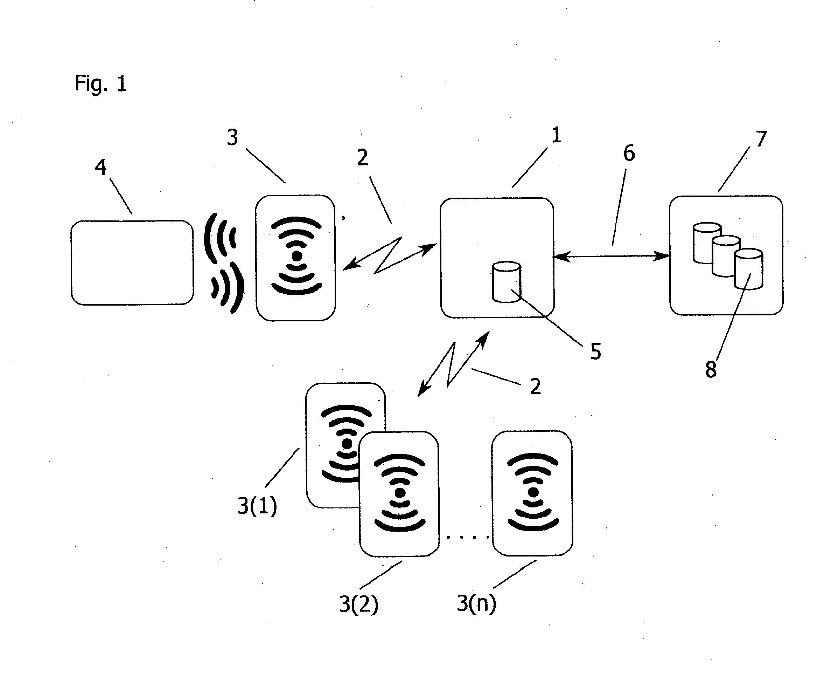

In Fig. 1 ist ein Gesamtsystem zur bargeldlosen Abwicklung von automatenbezogenen Nutzungsvorgängen unter Verwendung einer Speicherkarte 4 dargestellt, wie es zum Beispiel im Umfeld von Systemen für den öffentlichen Personennahverkehr zum Einsatz kommen kann. Das exemplarische System umfasst eine zentrale Verarbeitungseinheit 7 mit einer zentralen Datenbank 8. Mit der zentralen Verarbeitungseinheit 7 ist eine ebenfalls dem System zugehörige, lokale Verarbeitungseinheit 1 über eine bidirektionale Kommunikationsverbindung 6 verbunden. Neben der dargestellten lokalen Verarbeitungseinheit 1 stehen noch weitere, nicht dargestellte lokale Verarbeitungseinheiten mit der zentralen Verarbeitungseinheit 7 in bidirektionaler Kommunikationsverbindung. Mit jeder lokalen Verarbeitungseinheit 1, die jeweils vorliegend mindestens eine lokale Datenbank 5 umfasst, ist wiederum eine Anzahl von zum System gehöriger Automaten in Form von Smartcard-Schreib-/Lesegeräten 3 (1) bis 3 (n) angeschlossen. Jedes Smartcard-Schreib-/Lesegerät 3 (1) bis 3 (n) steht über eine bidirektionale Kommunikationsverbindung 2 in Form einer Funkverbindung mit der lokalen Verarbeitungseinheit 1 in Kommunikation. Die Reichweite der Funkverbindung beträgt in dieser Ausgestaltung etwa 150 m. Die Reichweite kann den örtlichen Bedingungen angepasst werden.

Die lokale Verarbeitungseinheit 1 inklusive der lokalen Datenbank 5 kann vor Ort in einem Fahrkartenautomat, auf einem Rechner, in einem Bediener-geführten Verkaufsgerät oder dergleichen integriert sein.

Vorliegend ist die bidirektionale Kommunikationsverbindung 2 als Funkverbindung ausgebildet, so dass die Smartcard-Schreib-/Lesegeräte 3 (1) bis 3 (n) bei minimalem Aufstellaufwand in beliebiger Weise in einem räumlich/logischen Verbund angeordnet werden können. Hierbei kann sich eine Speisung der Smartcard-Schreib-/Lesegeräte 3 (1) bis 3 (n) über Batterie als sinnvoll erweisen. Natürlich kann eine leitungsgebundene bidirektionale Kommunikationsverbindung anstelle oder zusätzlich zur Funkverbindung 2 vorgesehen sein. Ebenso kann die bidirektionale Kommunikationsverbindung 6 zur zentralen Verarbeitungseinheit 7 leitungsgebunden und/oder drahtlos erfolgen.

In der lokalen Datenbank 5 sind unter anderem Tarifdaten, Hotlists, Blacklists, Whitelists, Actionlists und dergleichen vorhanden, die es ermöglichen, einen sicheren Betrieb des Systems zu gewährleisten und die Nutzungsdaten von erfassten Smartcards 4 zu verarbeiten. Im Stand der Technik ist es erforderlich, dass die Smartcard-Schreib-/Lesegeräte 3 (1) bis 3 (n) zur Ausstellung einer Nutzungsberechtigung eine Kommunikationsverbindung zu der lokalen Verarbeitungseinheit 1 und der darin enthaltenen lokalen Datenbank 5 und insbesondere auch zu diesen Listen haben, so dass eine sichere Tarifverarbeitung und Verbuchung erfolgen kann. Ein Abgleich der Daten in der lokalen Datenbank 5 mit den Daten in der zentralen Datenbank 8 über die Kommunikationsverbindung 6 erfolgt hiervon unabhängig. Auch muss die Kommunikationsverbindung 6 nicht konstant und nicht regelmäßig bestehen für eine bestimmungsgemäße Funktion.

Das System, welches zur Ausführung des erfindungsgemäßen Verfahrens dient, umfasst ferner als Speicherkarte eine Vielzahl von Smartcards, von denen eine Smartcard 4 in den Figuren dargestellt ist, die in diesem Ausführungsbeispiel als elektronischer Fahrausweis für die Nutzung des öffentlichen Verkehrsmittels dient. Die Smartcard 4 ist mit einer nicht bezeichneten Identifikation versehen, so dass es möglich ist, die Smartcard 4 eindeutig einem Nutzer zuzuordnen. Der Nutzer nutzt die Smartcard 4 als Fahrausweis, wenn er das öffentliche Verkehrsmittel nutzen möchte. Die Smartcard 4 umfasst ferner einen nicht dargestellten Speicherbereich, in dem eine Nutzungsberechtigung gespeichert werden kann, die von einem der Smartcard-Schreib-/Lesegeräte 3 (1) bis 3 (n) auf der Smartcard 4 gespeichert werden kann.

Hierzu ist vorgesehen, dass die Kommunikationsverbindung zwischen der Smartcard 4 und dem Smartcard-Schreib-/Lesegerät 3 durch eine Nahfunkverbindung gebildet ist und dass das Smartcard-Schreib-/Lesegerät 3 einen Erfassungsbereich aufweist, in den die Smartcard 4 vom Nutzer gehalten wird, so dass das Smartcard-Schreib-/Lesegerät 3 in bidirektionale Kommunikation mit der Smartcard 4 treten kann. Alternativ kann auch ein Einführschlitz vorgesehen sein, wodurch die Smartcard 4 in einer definierten Position zum Smartcard-Schreib-/Lesegerät 3 gebracht werden kann. Natürlich kann auch eine kontaktbehaftete Kommunikationsverbindung vorgesehen sein, beispielsweise indem auf der Smartcard 4 ein Kontaktfeld vorgesehen ist, welches bei Einführen in den nicht bezeichneten Einführschlitz des Smartcard-Schreib-/Lesegerätes 3 durch entsprechende Kontaktfedern des Smartcard-Schreib-/Lesegerätes 3 kontaktiert wird und auf diese Weise eine leitungsgebundene Kommunikationsverbindung zur Smartcard 4 herstellt.

Für den Erwerb einer Nutzungsberechtigung für das öffentliche Verkehrsmittel hält der Nutzer seine Smartcard 4 in den Erfassungsbereich des Smartcard-Schreib-/Lesegerätes 3. Das Smartcard-Schreib-/Lesegerät 3 erkennt die Smartcard 4 und stellt automatisch eine Kommunikationsverbindung zur Smartcard 4 her. In einem nicht dargestellten Auswahlmenü, welches auf einem nicht dargestellten Monitor des Automaten des Smartcard-Schreib-/Lesegeräts 3 angezeigt wird, kann der Nutzer mittels einer ebenfalls nicht dargestellten Eingabeeinrichtung in Form einer Tastatur des Automaten nun ein Fahrziel auswählen und das Smartcard-Schreib-/Lesegerät 3 schreibt eine diesbezügliche Nutzungsberechtigung in den entsprechenden Speicherbereich der Smartcard 4. Alternativ kann die Nutzungsberechtigung automatisch in Abhängigkeit von der Position des Smartcard-Schreib-/Lesegerät 3 beziehungsweise der lokalen Verarbeitungseinheit 1 und/oder der vorherigen Nutzungsvorgängen erzeugt werden. Die Nutzungsberechtigung ist vorliegend verschlüsselt in einem gesonderten Bereich des Speicherbereichs der Smartcard 4 gespeichert und dient während der Nutzung des öffentlichen Transportmittels durch den Nutzer als Nachweis für einen gültigen Fahrschein. Hierzu kann bedarfsweise die Nutzungsberechtigung aus der Smartcard beispielsweise von einem Kontrolleur mittels eines Kontrollgerätes oder dergleichen ausgelesen werden und auf deren Gültigkeit geprüft werden. Die Nutzungsberechtigung selbst ist vorliegend durch einen binären digitalen Code gebildet, der mit einer Zeitmarke der Ausgabe des Codes versehen ist. Das Smartcard-Schreib-/Lesegerät 3 verfügt hierzu über eine Uhr, die die aktuelle Uhrzeit bereitstellt. Auf diese Weise kann sichergestellt werden, dass die Nutzungsberechtigung nicht in beliebiger Weise genutzt werden kann, sondern lediglich für einen vorgebbaren Zeitraum, der üblicherweise für die vorgesehene Nutzung des öffentlichen Verkehrsmittels als angemessen anzunehmen ist.

Bevor jedoch die Nutzungsberechtigung vom Smartcard-Schreib-/Lesegerät 3 auf die Smartcard 4 gespeichert wird, werden entsprechende nutzungsbezogene Transaktionsdaten von dem Smartcard-Schreib-/Lesegerät 3 über die Kommunikationsverbindung 2 an die lokale Verarbeitungseinheit 1 mit Datenbank 5 übertragen. Die lokale Verarbeitungseinheit 1 erzeugt daraus zugehörige Transaktionsdaten, die über die Kommunikationsverbindung 2 zurück an das Smartcard-Schreib-/Lesegerät 3 gesendet werden. Das Smartcard-Schreib-/Lesegerät 3 speichert die Nutzungsberechtigung auf der Smartcard 4 und gibt ein optisches und/oder akustisches Signal oder eine Displaynachricht an den Nutzer der Smartcard 4 aus, so dass dieser sicher sein kann, dass die Transaktion abgeschlossen ist und er seine Reise mit dem öffentlichen Verkehrsmittel antreten kann.

Um eine schnelle Verarbeitung zu gewährleisten, werden nur die in der lokalen Datenbank 5 vorhandenen Daten für die Erzeugung der Nutzungsberechtigung herangezogen. Die lokale Datenbank 5 speichert die nutzungsbezogenen Transaktionsdaten und reicht diese Daten im Nachgang an die zentrale Datenbank 8 weiter, die dann eine Aktualisierung der Nutzungsdaten der Smartcard 4 vornimmt. Die nutzungsbezogenen Transaktionsdaten umfassen die Identifikation der Smartcard 4. Vorliegend kann vorgesehen sein, dass die zentrale Datenbank 8 anhand der nutzungsbezogenen Transaktionsdaten eine Abbuchung von einem laufenden Konto des Nutzers der Smartcard 4 vornimmt.

Es kann vorgesehen sein, dass, sobald die Abbuchung erfolgreich gebucht wurde, das Smartcard-Schreib-/Lesegerät 3 über die Kommunikationsverbindung 2 den Befehl erhält, die Nutzungsberechtigung auf der Smartcard 4 zu speichern. Das Smartcard-Schreib-/Lesegerät 3 speichert sodann die Nutzungsberechtigung auf der Smartcard 4 und gibt ein optisches und/oder akustisches Signal an den Nutzer der Smartcard 4 aus, dass die Berechtigung auf der Smartcard 4 gespeichert ist.

Der Nutzer entfernt die Smartcard 4 aus dem Einführschlitz des Smartcard-Schreib-/Lesegerätes 3 und tritt seine Reise mit dem öffentlichen Verkehrsmittel an.

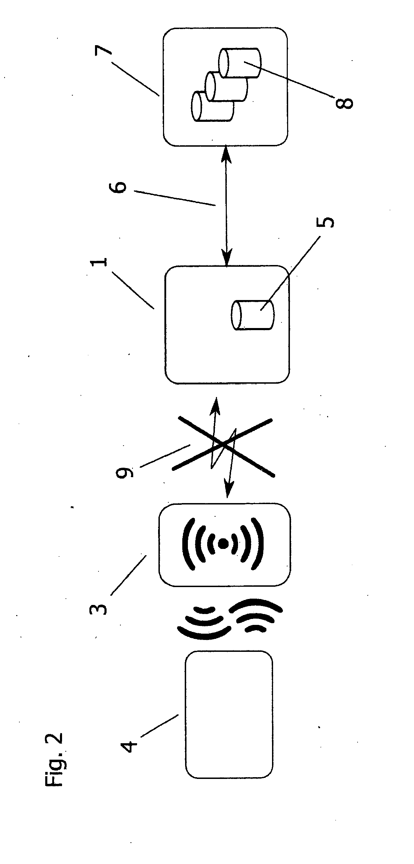

Fig. 2 zeigt das System gemäß Fig. 1, wobei jedoch die Funkverbindung 2 gestört ist. Die gestörte Funkverbindung ist vorliegend mit dem Bezugszeichen 9 in der Fig. 2 gekennzeichnet. Bei Systemen des Stands der Technik tritt in diesem Fall eine Störungsmeldung am Smartcard-Schreib-/Lesegerät 3 auf, welche üblicherweise durch eine Signallampe optisch potentiellen Nutzern angezeigt wird. In diesem Fall ist es den Nutzern nicht möglich, eine Nutzungsberechtigung zu erwerben.

Hier greift nun die Erfindung, die es ermöglicht, trotz der gestörten Kommunikationsverbindung 9 eine Nutzungsberechtigung zu erwerben. Hierzu weist die Smartcard 4 einen vom Speicherbereich für die Nutzungsberechtigungen separaten, nicht bezeichneten Speicherbereich auf, in dem nutzungsbezogene Transaktionsdaten für eine spätere Verbuchung gespeichert werden können. Die Smartcard 4 dient somit als Informationstransportmedium und somit als Bestandteil einer nicht bezeichneten Kommunikationsverbindung zur zentralen Datenbank 8.

Der Nutzer führt, wie zuvor zur Fig. 1 erläutert, seine Smartcard 4 in den Erfassungsbereich des Smartcard-Schreib-/Lesegerätes 3 ein, woraufhin die Smartcard 4 detektiert wird und eine Kommunikationsverbindung zur Smartcard 4 herstellt wird. Das Smartcard-Schreib-/Lesegerät 3 schreibt nutzungsbezogene Transaktionsdaten in den davor vorgesehenen Speicherbereich der Smartcard 4. Zugleich wird eine Nutzungsberechtigung in den für Nutzungsberechtigungen vorgesehenen Speicherbereich gespeichert. Nach erfolgreicher Speicherung der Daten auf der Smartcard 4 zeigt das Smartcard-Schreib-/Lesegerät 3 die erfolgreiche Transaktion optisch mittels einer Leuchte dem Nutzer an. Der Nutzer entfernt seine Smartcard 4 aus dem Erfassungsbereich des Smartcard-Schreib-/Lesegerätes 3 und tritt wie gewohnt seine Fahrt an.

In dieser Ausgestaltung konnten die nutzungsbezogenen Transaktionsdaten nicht an die lokale Verarbeitungseinheit 1 mit ihrer lokalen Datenbank 5 übertragen und dort verarbeitet werden. Somit kann auch zunächst noch keine Verbuchung der Nutzung der Smartcard 4 in der zentralen Datenbank 8 erfolgen.

Bei einer folgenden Nutzung an einem Smartcard-Schreib-/Lesegerät 3, welches, wie in Fig. 1 dargestellt, eine Kommunikationsverbindung 2 zur lokalen Datenbank 5 hat, prüft das Smartcard-Schreib-/Lesegerät 3, ob in dem für nutzungsbezogene Transaktionsdaten vorgesehenen Speicherbereich der Smartcard 4 entsprechende Daten abgelegt sind und liest diese gegebenenfalls aus. Die ausgelesenen nutzungsbezogenen Transaktionsdaten werden sodann über die Kommunikationsverbindung 2 an die lokale Verarbeitungseinheit 1 übermittelt und unter Nutzung der Daten aus Datenbank 5 verarbeitet, gültige und vollständige Transaktionsdaten erzeugt, in Datenbank 5 gespeichert und/oder in Folge an die zentrale Datenbank 8 weitergegeben, welche daraufhin die entsprechenden abrechnungsrelevanten Vorgänge durchführt, wie zuvor anhand von Fig. 1 beschrieben.

Sodann kann der Nutzer, wie ebenfalls anhand von Fig. 1 beschrieben, eine weitere Nutzungsberechtigung für eine weitere Nutzung des öffentlichen Verkehrsmittels erwerben.

Natürlich kann auch vorgesehen sein, dass einzelne Smartcard-Schreib-/Lesegeräte 3 vollständig autonom betriebenen werden können. So können zum Beispiel mehrere nutzungsbezogene Transaktionsdaten auf der Smartcard 4 gespeichert werden, und zu einem späteren Zeitpunkt ausgelesen werden, um eine Verbuchung zu ermöglichen. Diese Ausgestaltung erlaubt es, Smartcard-Schreib-/Lesegeräte auch an Stellen insbesondere nachträglich zu installieren, an denen eine Kommunikationsverbindung zu einer Datenbank, insbesondere der lokalen beziehungsweise zentralen Datenbank, nur mit einem erheblichen Aufwand möglich ist, der die Wirtschaftlichkeit des Verfahrens in Frage stellen würde. Die erfindungsgemäße Möglichkeit, die Smartcard selbst als Teil der Kommunikationsverbindung zu verwenden, indem sie als Informationstransfermedium genutzt wird, ermöglicht es, die Zuverlässigkeit und Flexibilität speicherkartenbasierter bargeldloser Abwicklungen von automatenbezogenen Nutzungsvorgängen erheblich zu verbessern. Darüber hinaus kann die Effizienz erhöht werden, indem beispielsweise lediglich eine begrenzte Anzahl an Smartcard-Schreib-/Lesegeräten mit der Verarbeitungseinheit und/oder Datenbank in Kommunikationsverbindung stehen. Dies reduziert nicht nur den Materialaufwand, sondern auch den Energieverbrauch, und zwar insbesondere den, der für den Betrieb der Kommunikationsverbindung erforderlich ist. Darüber hinaus kann mit der Erfindung die Störsicherheit weiter verbessert werden, da bei einer gestörten Kommunikationsverbindung zwischen dem Smartcard-Schreib-/Lesegerät 3 und der lokalen Datenbank 5 der bestimmungsgemäße Betrieb durch einen Alternativbetrieb ermöglicht werden kann, indem nämlich das Smartcard-Schreib-/Lesegerät 3 in einen autonomen Betriebsmodus wechselt und die Speicherkarte 4 als Informationstransfermedium nutzt. Die Speicherkarte 4 stellt somit in Verbindung mit einer späteren Auslesung der nutzungsbezogenen Transaktionsdaten eine alternative Kommunikationsverbindung zur Datenbank dar.

In einer besonders einfachen Ausgestaltung ist vorgesehen, dass die Speicherkarte für Nutzungsberechtigungen sowie auch für die nutzungsbezogenen Transaktionsdaten einen gemeinsamen Speicher aufweist. Damit beim Auslesen die nutzungsbezogenen Transaktionsdaten leicht aufgefunden werden können, sind diese beim Schreiben auf die Speicherkarte 4 mit einer Kennzeichnung versehen. Die Kennzeichnung besteht in dieser Ausgestaltung durch eine zusätzliche Bitfolge, die an die Transaktionsdaten angehängt wird. Dadurch ist es möglich, beim Auslesen von Daten aus der Speicherkarte diese unmittelbar als gespeicherte nutzungsbezogene Transaktionsdaten zu erkennen und einer separaten Behandlung zuzuführen.

Ausgelesen werden die auf der Speicherkarte gespeicherten Transaktionsdaten dann, wenn die Speicherkarte 4 von einem mit der lokalen Datenbank 5 in Kommunikationsverbindung stehenden Smartcard-Schreib-/Lesegerät 3 erfasst wird. Dies kann beispielsweise erst nach einer zufälligen Anzahl von vorangegangenen Nutzungen erfolgen. Der Speicher der Speicherkarte 4 ist dementsprechend auszulegen.

Die auf der Speicherkarte gespeicherten Transaktionsdaten können beim Auslesen gelöscht werden. Damit wird der Speicherplatz für weitere zukünftige nutzungsbezogene Transaktionsdaten freigegeben.

Es kann aber auch im Allgemeinen vorgesehen sein, dass die auf der Speicherkarte gespeicherten und ausgelesenen Transaktionsdaten mit einer weiteren Kennung versehen werden. Diese weitere Kennung kann ebenfalls wie die zuvor genannte Kennung aus einer zusätzlichen Bitfolge bestehen, die den Transaktionsdaten ebenfalls anstelle des Löschens zugefügt wird. Die ausgelesenen Transaktionsdaten verbleiben somit zusammen mit der weiteren Kennzeichnung zunächst im Speicher der Speicherkarte gespeichert. Erst wenn eine weitere Auslesung von Transaktionsdaten aus der Speicherkarte erfolgt, werden Transaktionsdaten, die bereits die weitere Kennzeichnung umfassen, gelöscht. Hierdurch ist es möglich, zumindest zeitweise die Transaktionsdaten redundant sowohl in der Datenbank als auch auf der Speicherkarte bereitzuhalten. Dies ist unter anderem dann von Vorteil, wenn die Kommunikationsverbindung zwischen dem Automaten beziehungsweise dem Smartcard-Schreib-/Lesegerät und der Verarbeitungseinheit beziehungsweise der Datenbank von schlechter Qualität ist und mit Datenverlust zu rechnen ist. Dann besteht nämlich die Möglichkeit, bei einer weiteren Kommunikation zwischen der Speicherkarte und dem Automaten beziehungsweise dem Smartcard-Schreib-/Lesegerät einzelne nutzungsbezogene Transaktionsdaten durch erneutes Auslesen zu überprüfen. Natürlich kann auch vorgesehen sein, dass der Nutzer selbst die Kontrolle über die Löschung von nutzungsbezogenen Transaktionsdaten auf der Speicherkarte hat. So kann vorgesehen sein, dass der Nutzer bestimmt, wann die Transaktionsdaten gelöscht werden. Auch hierzu kann die weitere Kennzeichnung von ausgelesenen Transaktionsdaten dienen. So kann nämlich sichergestellt werden, dass der Nutzer nur die Transaktionsdaten löschen kann, die bereits aus der Speicherkarte ausgelesen worden sind.

Zum Auslesen der Speicherkarte kann auch ein einfaches Kommunikationsterminal dienen, beispielsweise auch ein Computer, wie er als handelsüblicher PC oder dergleichen zum Einsatz kommt. Es ist lediglich erforderlich, dass das Kommunikationsterminal mit der Verarbeitungseinheit beziehungsweise der Datenbank in Kommunikationsverbindung steht und somit die aus der Speicherkarte ausgelesenen Transaktionsdaten an die Verarbeitungseinheit beziehungsweise die Datenbank übermitteln kann. So kann das Auslesen der nutzungsbezogenen Transaktionsdaten auch vom Nutzer selbst, beispielsweise an seinem privaten PC vorgenommen werden. Beispielsweise können die Smartcard-Schreib-/Lesegeräte 3 in diesem Fall vorzugsweise alle autonom betrieben werden, das heißt, ohne Kommunikationsverbindung zur Datenbank.

Auf Basis der Transaktionsdaten erfolgt eine Verbuchung der Nutzung, indem anhand der in der Datenbank vorhandenen Daten eine Belastung der Nutzung an den Nutzer erfolgt. Dies kann dadurch erreicht werden, dass der Nutzer über ein Guthaben bei der Datenbank verfügt, von welchem ein der Nutzung entsprechender Wert abgezogen wird. Alternativ oder zusätzlich kann auch vorgesehen sein, dass eine entsprechende Abbuchung von einem Benutzerkonto oder von einem auf der Smartcard 4 vorhandenen Guthaben erfolgt.

Die Erfindung erlaubt es somit, Nutzungsvorgänge trotz fehlender Kommunikation zwischen dem Automaten beziehungsweise den Smartcard-Schreib-/Lesegeräten und einer Verarbeitungseinheit beziehungsweise einer Datenbank nachvollziehen zu können. Ausgefallene Datenbanken oder Kommunikationsverbindungen zu Datenbanken haben keine Auswirkungen für den Betrieb des Systems, denn der Nutzer kann nach wie vor seine Smartcard beziehungsweise Speicherkarte bestimmungsgemäß nutzen. So kann dadurch vermieden werden, dass ein Nutzer eines öffentlichen Verkehrsmittels nicht unwillentlich schwarzfahren muss, weil das Gerät zum Erwerb der Nutzungsberechtigung vor Ort ausgefallen ist. Darüber hinaus können zusätzliche Automaten im autonomen Betrieb vorgesehen werden, was insbesondere bei schwierigen räumlichen Verhältnissen oder kurzfristig hoher Nutzerfrequenz von Vorteil ist. Weiterhin erweist es sich als vorteilhaft, flexibel autonom betriebene Automaten aufstellen zu können, beispielsweise um Hochbetriebsphasen oder Veranstaltungen bedienen zu können.

Das in den Figuren dargestellte Ausführungsbeispiel dient lediglich der Erläuterung der Erfindung und ist für diese nicht beschränkend.

### Bezugszeichenliste

- 1: lokale Verarbeitungseinheit
- 2: bidirektionale Kommunikationsverbindung
- 3: Smartcard-Schreib-/Lesegerät
- 4: Smartcard
- 5: lokale Datenbank
- 6: bidirektionale Kommunikationsverbindung
- 7: zentrale Verarbeitungseinheit
- 9: gestörte / nichtvorhandene Kommunikationsverbindung

## Patentansprüche

1. Verfahren zur vorzugsweise bargeldlosen Abwicklung von insbesondere automatenbezogenen Nutzungsvorgängen unter Verwendung einer Speicherkarte (4), wobei eine Nutzung durch einen mit einer Datenbank (5) und/oder einer Verarbeitungseinheit (1) in Kommunikationsverbindung (2) stehenden Automaten (3) bei Erfassung einer Speicherkarte (4) bereitgestellt wird und nutzungsbezogene Transaktionsdaten vom Automaten (3) an die Datenbank (1) und/oder die Verarbeitungseinheit (1) übermittelt werden,
**dadurch gekennzeichnet,**
**dass** die nutzungsbezogenen Transaktionsdaten zumindest zeitweise auf der Speicherkarte (4) gespeichert werden und die Speicherkarte (4) somit als Informationstransfermedium verwendet wird.

2. Verfahren nach Anspruch 1, **dadurch gekennzeichnet, dass** die auf der Speicherkarte (4) gespeicherten Transaktionsdaten mit einer Kennzeichnung gespeichert werden.

3. Verfahren nach Anspruch 1 oder 2, **dadurch gekennzeichnet, dass** auf der Speicherkarte (4) gespeicherte Transaktionsdaten vorzugsweise zeitversetzt ausgelesen werden, wenn die Speicherkarte (4) von einem mit der Verarbeitungseinheit (1) und/oder der Datenbank (5) in Kommunikationsverbindung (2) stehenden Automaten (3) erfasst wird.

4. Verfahren nach einem der Ansprüche 1 bis 3, **dadurch gekennzeichnet, dass** die aus der Speicherkarte (4) von einem mit einer Verarbeitungseinheit (1) und/oder Datenbank (5) in Kommunikationsverbindung (2) stehenden Smartcard-Schreib-/Lesegerät (3) zeitversetzt ausgelesenen Daten durch eine Verarbeitungseinheit (1) weiterverarbeitet werden.

5. Verfahren nach Anspruch 4, **dadurch gekennzeichnet, dass** die weiterverarbeiteten Transaktionsdaten in einer lokalen Datenbank (5) gespeichert werden.

6. Verfahren nach Anspruch 4 oder 5, **dadurch gekennzeichnet, dass** die weiterverarbeiteten Transaktionsdaten an eine zentrale Datenbank (8) weitergeleitet werden.

7. Verfahren nach einem der Ansprüche 4 bis 6, **dadurch gekennzeichnet, dass** auf Grund der Weiterverarbeitung über das Smartcard-Schreib-/Lesegerät (3) geänderte Berechtigungsdaten auf die Speicherkarte (4) geschrieben werden.

8. Verfahren nach einem der Ansprüche 1 bis 7, **dadurch gekennzeichnet, dass** die auf der Speicherkarte (4) gespeicherten Transaktionsdaten beim Auslesen gelöscht werden.

9. Verfahren nach einem der Ansprüche 1 bis 8, **dadurch gekennzeichnet, dass** das Auslesen der auf der Speicherkarte (4) gespeicherten Transaktionsdaten mittels der Kennzeichnung gesteuert wird.

10. Verfahren nach einem der Ansprüche 1 bis 9, **dadurch gekennzeichnet, dass** die auf der Speicherkarte (4) gespeicherten und ausgelesenen Transaktionsdaten mit einer Kennzeichnung versehen werden.

11. Verfahren nach einem der Ansprüche 1 bis 10, **dadurch gekennzeichnet, dass** die auf der Speicherkarte (4) gespeicherten Transaktionsdaten mittels eines Kommunikationsterminals ausgelesen werden.

12. Verfahren nach einem der Ansprüche 1 bis 11, **dadurch gekennzeichnet, dass** das Auslesen der auf der Speicherkarte (4) gespeicherten Transaktionsdaten automatisch erfolgt.

13. Verfahren nach einem der Ansprüche 1 bis 12, **dadurch gekennzeichnet, dass** auf der Basis der Transaktionsdaten eine Abwicklung der Nutzung erfolgt.

## Geänderte Patentansprüche

### Geänderte Patentansprüche gemäss Regel 137(2) EPÜ.

**1.** Verfahren zur bargeldlosen Abwicklung von insbesondere automatenbezogenen Nutzungsvorgängen unter Verwendung einer Speicherkarte (4), wobei eine Nutzung durch einen mit einer Datenbank (5) und/oder einer Verarbeitungseinheit (1) in Kommunikationsverbindung stehenden Automaten (3) bei Erfassung einer Speicherkarte (4) bereitgestellt wird und nutzungsbezogene Transaktionsdaten vom Automaten (3) an die Datenbank (5) und/oder die Verarbeitungseinheit (1) übermittelt werden,
**dadurch gekennzeichnet,**
**dass** eine virtuelle Kommunikationsverbindung geschaffen wird, indem die nutzungsbezogenen Transaktionsdaten zumindest zeitweise auf der Speicherkarte (4) gespeichert werden und die Speicherkarte (4) somit als Informationstransfermedium als Teil der virtuellen Kommunikationsverbindung vom Automaten (3) zur Datenbank (5) und/oder zur Verarbeitungseinheit (1) verwendet wird, wobei bei einer späteren Nutzung eines mit der Datenbank (5) und/oder der Verarbeitungseinheit (1) in Kommunikationsverbindung (2) stehenden Automaten (3) mittels der Speicherkarte (4) die auf der Speicherkarte (4) gespeicherten nutzungsbezogenen Transaktionsdaten ausgelesen und die vollständigen Transaktionsdaten ermittelt werden.

**2.** Verfahren nach Anspruch 1, **dadurch gekennzeichnet, dass** die auf der Speicherkarte (4) gespeicherten Transaktionsdaten mit einer Kennzeichnung gespeichert werden.

**3.** Verfahren nach Anspruch 1 oder 2, **dadurch gekennzeichnet, dass** auf der Speicherkarte (4) gespeicherte Transaktionsdaten vorzugsweise zeitversetzt ausgelesen werden, wenn die Speicherkarte (4) von einem mit der Verarbeitungseinheit (1) und/oder der Datenbank (5) in Kommunikationsverbindung (2) stehenden Automaten (3) erfasst wird.

**4.** Verfahren nach einem der Ansprüche 1 bis 3, **dadurch gekennzeichnet, dass** die aus der Speicherkarte (4) von einem mit einer Verarbeitungseinheit (1) und/oder Datenbank (5) in Kommunikationsverbindung (2) stehenden Smartcard-Schreib-/Lesegerät (3) zeitversetzt ausgelesenen Daten durch eine Verarbeitungseinheit (1) weiterverarbeitet werden.

**5.** Verfahren nach Anspruch 4, **dadurch gekennzeichnet, dass** die weiterverarbeiteten Transaktionsdaten in einer lokalen Datenbank (5) gespeichert werden.

**6.** Verfahren nach Anspruch 4 oder 5, **dadurch gekennzeichnet, dass** die weiterverarbeiteten Transaktionsdaten an eine zentrale Datenbank (8) weitergeleitet werden.

**7.** Verfahren nach einem der Ansprüche 4 bis 6, **dadurch gekennzeichnet, dass** auf Grund der Weiterverarbeitung über das Smartcard-Schreib-/Lesegerät (3) geänderte Berechtigungsdaten auf die Speicherkarte (4) geschrieben werden.

**8.** Verfahren nach einem der Ansprüche 1 bis 7, **dadurch gekennzeichnet, dass** die auf der Speicherkarte (4) gespeicherten Transaktionsdaten beim Auslesen gelöscht werden.

**9.** Verfahren nach einem der Ansprüche 1 bis 8, **dadurch gekennzeichnet, dass** das Auslesen der auf der Speicherkarte (4) gespeicherten Transaktionsdaten mittels der Kennzeichnung gesteuert wird.

**10.** Verfahren nach einem der Ansprüche 1 bis 9, **dadurch gekennzeichnet, dass** die auf der Speicherkarte (4) gespeicherten und ausgelesenen Transaktionsdaten mit einer Kennzeichnung versehen werden.

**11.** Verfahren nach einem der Ansprüche 1 bis 10, **dadurch gekennzeichnet, dass** die auf der Speicherkarte (4) gespeicherten Transaktionsdaten mittels eines Kommunikationsterminals ausgelesen werden.

**12.** Verfahren nach einem der Ansprüche 1 bis 11, **dadurch gekennzeichnet, dass** das Auslesen der auf der Speicherkarte (4) gespeicherten Transaktionsdaten automatisch erfolgt.

**13.** Verfahren nach einem der Ansprüche 1 bis 12, **dadurch gekennzeichnet, dass** auf der Basis der Transaktionsdaten eine Abwicklung der Nutzung erfolgt.
